(19) Europäisches Patentamt / European Patent Office / Office européen des brevets

(11) EP 4 332 163 A1

(12) EUROPEAN PATENT APPLICATION
published in accordance with Art. 153(4) EPC

(43) Date of publication:
**06.03.2024 Bulletin 2024/10**

(21) Application number: **23808649.0**

(22) Date of filing: **31.05.2023**

(51) International Patent Classification (IPC):
***C08L 51/06*** (2006.01) ***C08L 33/06*** (2006.01)
***C08F 285/00*** (2006.01) ***C08F 265/06*** (2006.01)
***C08F 220/18*** (2006.01) ***C08F 220/44*** (2006.01)
***C08F 212/08*** (2006.01)

(52) Cooperative Patent Classification (CPC):
**C08F 212/08; C08F 220/18; C08F 220/44; C08F 265/06; C08F 285/00; C08L 33/06; C08L 51/06**

(86) International application number:
**PCT/KR2023/007433**

(87) International publication number:
**WO 2023/243910 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 KR 20220072522**

(71) Applicant: **LG Chem, Ltd.**
**Seoul 07336 (KR)**

(72) Inventors:
- **PARK, Jangwon**
**Daejeon 34122 (KR)**
- **AHN, Bong Keun**
**Daejeon 34122 (KR)**
- **KIM, Min Jung**
**Daejeon 34122 (KR)**
- **JEON, Jiyoon**
**Daejeon 34122 (KR)**
- **LEE, Eunji**
**Daejeon 34122 (KR)**
- **KIM, Seyong**
**Daejeon 34122 (KR)**

(74) Representative: **Plasseraud IP**
**66, rue de la Chaussée d'Antin**
**75440 Paris Cedex 09 (FR)**

# (54) THERMOPLASTIC RESIN COMPOSITION, METHOD FOR PRODUCING SAME, AND MOLDED ARTICLE PRODUCED THEREFROM

(57) The present invention relates to a thermoplastic resin composition, a method of preparing the same, and a molded article manufactured using the same. More particularly, the present invention relates to a thermoplastic resin composition including an alkyl acrylate-aromatic vinyl compound-vinyl cyanide compound graft copolymer (A) including a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and a non-graft copolymer (B) including an alkyl (meth)acrylate, an aromatic vinyl compound, and a vinyl cyanide compound, wherein the average particle diameter and refractive index of each layer of the graft copolymer (A) are properly adjusted, a method of preparing the thermoplastic resin composition, and a molded article manufactured using the thermoplastic resin composition.

According to the present invention, the present invention has an effect of providing a thermoplastic resin composition having excellent transparency, gloss, weather resistance, and impact resistance, a method of preparing the same, and a molded article manufactured using the same.

EP 4 332 163 A1

## Description

[Technical Field]

[Cross-Reference to Related Application]

This application claims priority to Korean Patent Application No. 10-2022-0072522, filed on June 15, 2022, in the Korean Intellectual Property Office, the disclosure of which is incorporated herein by reference.

The present invention relates to a thermoplastic resin composition, a method of preparing the same, and a molded article manufactured using the same. More particularly, the present invention relates to a thermoplastic resin composition having excellent transparency, gloss, weather resistance, and impact resistance by adjusting the composition and composition ratio of each layer of a graft copolymer having a polymer seed, a rubber core surrounding the seed, and a graft shell surrounding the core, adjusting the morphology of the rubber core, and adjusting the refractive index difference between the graft copolymer and a matrix polymer, a method of preparing the thermoplastic resin composition, and a molded article manufactured using the thermoplastic resin composition.

[Background Art]

Since an acrylate-styrene-acrylonitrile graft copolymer (hereinafter referred to as "ASA resin") does not contain unstable double bonds, the ASA resin has excellent weather resistance. Accordingly, ASA resins are applied to various fields such as electric/electronic parts, building materials (e.g., vinyl siding, etc.), extruded profiles, and automobile parts. Recently, in the field of outdoor products, market demand for high value-added products having properties such as unpainted, transparent, high chroma, and special colors is continuously increasing.

To implement transparency in a graft copolymer containing a rubber core, the refractive index difference between the rubber core, a graft shell, and a matrix resin should be small. In addition, to implement transparency in a resin composition containing a graft copolymer and a matrix resin, the refractive index difference between a rubber core and the matrix resin should be small. In this case, transparency is realized in the resin composition by preventing refraction and reflection of light at the interface of the graft copolymer.

In an ASA resin containing a butyl acrylate rubber core and a styrene-acrylonitrile copolymer shell, the refractive index of the butyl acrylate rubber is 1.46, and the refractive index of the styrene-acrylonitrile copolymer is 1.56 to 1.58. That is, the refractive index difference between the core and the shell is large, which makes the resin opaque. In addition, when a styrene-acrylonitrile copolymer (hereinafter referred to as "SAN resin") as a matrix resin is included in an ASA resin, the refractive index of the SAN resin is 1.56 to 1.58, and the refractive index difference between the core of the ASA and the SAN resin is large. Thus, the resin composition is opaque.

Therefore, there is necessary to develop a resin composition capable of realizing transparency by reducing the refractive index difference between a matrix resin and each of the seed, core, and shell constituting an ASA resin and having excellent gloss, weather resistance, and mechanical properties.

[Related Art Documents]

[Patent Documents]

KR 2006-0118156 A

[Disclosure]

[Technical Problem]

Therefore, the present invention has been made in view of the above problems, and it is one object of the present invention to provide a thermoplastic resin composition having excellent transparency, gloss, weather resistance, and impact resistance, a method of preparing the same, and a molded article manufactured using the same.

The above and other objects can be accomplished by the present invention described below.

[Technical Solution]

I) In accordance with one aspect of the present invention, provided is a thermoplastic resin composition including

an alkyl acrylate-aromatic vinyl compound-vinyl cyanide compound graft copolymer (A) including a seed, a rubber core surrounding the seed, and a graft shell surrounding the rubber core; and a non-graft copolymer (B) including an alkyl (meth)acrylate, an aromatic vinyl compound, and a vinyl cyanide compound, wherein the graft copolymer (A) satisfies Equation 1 below; when acetone is added to the thermoplastic resin composition and stirring and centrifugation are performed so that the thermoplastic resin composition is separated into a sol and a gel, a refractive index difference between the sol and the gel is 0.006 or less; the thermoplastic resin composition has a haze of 10 % or less as measured using a 3 mm thick injection specimen according to ASTM D1003; and the thermoplastic resin composition has an Izod impact strength of 10 kgf-cm/cm or more as measured at room temperature using a 1/4" thick specimen:

[Equation 1]

$$180 \leq 2*r2 \leq 300,$$

wherein, in Equation 1, r2 is a thickness (nm) from a center of the graft copolymer to the core.

II) In accordance with another aspect of the present invention, provided is a thermoplastic resin composition including an alkyl acrylate-aromatic vinyl compound-vinyl cyanide compound graft copolymer (A) including a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and a non-graft copolymer (B) including an alkyl (meth)acrylate, an aromatic vinyl compound, and a vinyl cyanide compound, wherein the graft copolymer (A) satisfies both Equations 1 and 2:

[Equation 1]

$$180 \leq 2*r2 \leq 300$$

[Equation 2]

$$25 \leq r2-r1 \leq 45,$$

wherein, in Equations 1 and 2, r1 is an average radius (nm) from a center of the graft copolymer to the polymer seed, and r2 is an average radius (nm) from a center of the graft copolymer to the rubber core.

III) In I) or II), in the graft copolymer (A), a refractive index difference between the rubber core and the shell may be preferably 0.093 or less.

IV) In I) or II), a refractive index difference between the polymer seed of the graft copolymer (A) and the non-graft copolymer (B) may be preferably 0.015 or less.

V) In I) to IV), based on 100 % by weight in total of the graft copolymer (A), the graft copolymer (A) may preferably include 5 to 35 % by weight of the seed, 25 to 55 % by weight of the rubber core, and 25 to 55 % by weight of the graft shell.

VI) In I) to V), the non-graft copolymer (B) may preferably include 55 to 85 % by weight of an alkyl (meth)acrylate, 10 to 35 % by weight of an aromatic vinyl compound, and 1 to 20 % by weight of a vinyl cyanide compound.

VII) In I) to VI), the thermoplastic resin composition may preferably include 10 to 90 % by weight of the graft copolymer (A) and 10 to 90 % by weight of the non-graft copolymer (B).

VIII) In I) to VII), the thermoplastic resin composition may preferably include an alkyl acrylate-aromatic vinyl compound-vinyl cyanide compound graft copolymer (C) containing a rubber core having an average particle diameter of 50 to 150 nm.

IX) In II) to VIII), when acetone is added to the thermoplastic resin composition and stirring and centrifugation are performed so that the thermoplastic resin composition is separated into a sol and a gel, a refractive index difference between the sol and the gel may be preferably 0.006 or less.

X) In II) to IX), the thermoplastic resin composition may preferably have a haze of 10 % or less as measured using a 3 mm thick injection specimen according to ASTM D1003.

XI) In I) to X), the thermoplastic resin composition may preferably have a gloss of 122 or more as measured at 45°

using a 3 mm thick injection specimen according to ASTM D2457.

XII) In II) to XI), the thermoplastic resin composition may preferably have an Izod impact strength of 10 kgf-cm/cm or more as measured at room temperature using a 1/4" thick specimen according to ASTM D256.

XIII) In accordance with still another aspect of the present invention, provided is a method of preparing a thermoplastic resin composition, the method including kneading and extruding, at 180 to 300 °C and 80 to 400 rpm, an alkyl acrylate-aromatic vinyl compound-vinyl cyanide compound graft copolymer (A) including a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and a non-graft copolymer (B) including an alkyl (meth)acrylate, an aromatic vinyl compound, and a vinyl cyanide compound, wherein the graft copolymer (A) satisfies both Equations 1 and 2 below:

[Equation 1]

$$180 \leq 2*r2 \leq 300$$

[Equation 2]

$$25 \leq r2-r1 \leq 45,$$

wherein, in Equations 1 and 2, r1 is a thickness (nm) from a center of the graft copolymer to the seed, and r2 is a thickness (nm) from a center of the graft copolymer to the core.

XIV) In XIII), in the kneading and extruding, an alkyl acrylate-aromatic vinyl compound-vinyl cyanide compound graft copolymer (C) containing a rubber core having an average particle diameter of 50 to 150 nm may be preferably included.

XV) In accordance with yet another aspect of the present invention, provided is a molded article including the thermoplastic resin composition according to I) to XII).

[Advantageous Effects]

According to the present invention, the present invention has an effect of providing a thermoplastic resin composition having excellent impact resistance, transparency, gloss, and weather resistance, a method of preparing the same, and a molded article manufactured using the same.

In addition, the thermoplastic resin composition of the present invention can be applied to automotive interior materials, automotive exterior materials, building materials, home appliances, or medical parts requiring high transparency, gloss, and weather resistance and can provide an aesthetically pleasing appearance and excellent impact resistance.

[Best Mode]

Hereinafter, a thermoplastic resin composition of the present invention, a method of preparing the same, and a molded article manufactured using the same will be described in detail.

The present inventors confirmed that, to improve the transparency, gloss, weather resistance, and impact resistance of a thermoplastic resin composition including an ASA resin and a matrix resin, when the composition ratio and/or refractive index difference of the seed, core, and shell constituting the ASA resin were adjusted within a predetermined range, and/or the refractive index difference between the ASA resin and the matrix resin was reduced, impact resistance was excellent, and transparency, gloss, and weather resistance were greatly improved. Based on these results, the present inventors conducted further studies to complete the present invention.

The thermoplastic resin composition of the present invention is a thermoplastic resin composition including an alkyl acrylate-aromatic vinyl compound-vinyl cyanide compound graft copolymer (A) including a seed, a rubber core surrounding the seed, and a graft shell surrounding the rubber core; and a non-graft copolymer (B) including an alkyl (meth)acrylate, an aromatic vinyl compound, and a vinyl cyanide compound, wherein the graft copolymer (A) satisfies Equation 1 below; when acetone is added to the thermoplastic resin composition and stirring and centrifugation are

performed so that the thermoplastic resin composition is separated into a sol and a gel, the refractive index difference between the sol and the gel is 0.006 or less; the thermoplastic resin composition has a haze of 10 % or less as measured using a 3 mm thick injection specimen according to ASTM D1003; and the thermoplastic resin composition has an Izod impact strength of 10 kgf-cm/cm or more as measured at room temperature using a 1/4" thick specimen. In this case, gloss and weather resistance may be excellent.

[Equation 1]

$$180 \leq 2*r2 \leq 300$$

In Equation 1, r2 is a thickness (nm) from the center of the graft copolymer to the core.

In addition, the thermoplastic resin composition of the present invention includes an alkyl acrylate-aromatic vinyl compound-vinyl cyanide compound graft copolymer (A) including a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and a non-graft copolymer (B) including an alkyl (meth)acrylate, an aromatic vinyl compound, and a vinyl cyanide compound, wherein the graft copolymer (A) satisfies both Equations 1 and 2 below. In this case, transparency, gloss, weather resistance, and impact resistance may be excellent.

[Equation 1]

$$180 \leq 2*r2 \leq 300$$

[Equation 2]

$$25 \leq r2-r1 \leq 45$$

In Equations 1 and 2, r1 is an average radius (nm) from the center of the graft copolymer to the polymer seed, and r2 is an average radius (nm) from the center of the graft copolymer to the core.

Hereinafter, each component of the thermoplastic resin composition of the present invention will be described in detail.

<u>(A) Alkyl acrylate-aromatic vinyl compound-vinyl cyanide compound graft copolymer</u>

For example, the graft copolymer (A) may be an alkyl acrylate-aromatic vinyl compound-vinyl cyanide compound graft copolymer including a seed, a rubber core surrounding the seed, and a graft shell surrounding the rubber core. The graft copolymer (A) may preferably include a seed obtained by polymerizing 45 to 72 % by weight of an alkyl acrylate and 28 to 55 % by weight of an aromatic vinyl compound, a rubber core formed to surround the polymer seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate. In this case, transparency, gloss, weather resistance, and impact resistance may be excellent. In addition, since an alkyl acrylate is included in the graft shell, compatibility with the non-graft copolymer (B) may be excellent, and thus physical property balance may be excellent.

<u>Seed</u>

For example, the polymer seed of the graft copolymer (A) may be prepared by polymerizing 45 to 72 % by weight of an alkyl acrylate and 28 to 55 % by weight of an aromatic vinyl compound, preferably 50 to 70 % by weight of an alkyl acrylate and 30 to 50 % by weight of an aromatic vinyl compound, more preferably 57 to 67 % by weight of an alkyl acrylate and 33 to 43 % by weight of an aromatic vinyl compound, still more preferably 62 to 67 % by weight of an alkyl acrylate and 33 to 38 % by weight of an aromatic vinyl compound. In this case, due to a decrease in the refractive index difference with the non-graft copolymer (B), transparency, gloss, and weather resistance may be excellent.

For example, the polymer seed of the graft copolymer (A) may have an average particle diameter of 120 to 220 nm, preferably 150 to 190 nm. Within this range, excellent impact resistance, fluidity, transparency, gloss, and weather resistance may be imparted to a finally prepared thermoplastic resin composition.

In the present disclosure, the average particle diameters of the polymer seed, rubber core, and graft shell of the graft copolymer may be measured by measurement methods commonly used in the technical field to which the present invention pertains, such as electron microscopy, without particular limitation. For example, for each of the polymer seed, the rubber core, and the graft shell, upon completion of preparation thereof, a sample is obtained, and the average particle diameter of the sample is measured by dynamic light scattering. Specifically, the average particle diameter is measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; and measurement wavelength: 632.8 nm.

For example, the refractive index difference between the polymer seed of the graft copolymer (A) and the non-graft copolymer (B) may be 0.015 or less, preferably 0.01 or less, more preferably 0.008 or less, still more preferably 0.006 or less, still more preferably 0.004 or less, still more preferably 0.001 to 0.004. Within this range, transparency, gloss, and weather resistance may be excellent.

Rubber core

For example, the rubber core of the graft copolymer (A) may be formed to surround the seed and may be obtained by polymerizing 78 to 91 % by weight of an alkyl acrylate and 9 to 22 % by weight of an aromatic vinyl compound, preferably 81 to 88 % by weight of an alkyl acrylate and 12 to 19 % by weight of an aromatic vinyl compound, more preferably 84 to 88 % by weight of an alkyl acrylate and 12 to 16 % by weight of an aromatic vinyl compound. In this case, physical property balance, impact resistance, transparency, gloss, and weather resistance may be excellent.

For example, the rubber core may have an average particle diameter of 180 to 300 nm, preferably 200 to 280 nm, preferably 230 to 260 nm. Within this range, physical property balance and impact resistance may be excellent.

Graft shell

For example, the graft shell of the graft copolymer (A) may be formed to surround the rubber core and may be obtained by polymerizing 65 to 82 % by weight of an aromatic vinyl compound, 12 to 30 % by weight of a vinyl cyanide compound, and 3 to 15 % by weight of an alkyl acrylate, preferably 66 to 78 % by weight of an aromatic vinyl compound, 14 to 26 % by weight of a vinyl cyanide compound, and 3 to 13 % by weight of an alkyl acrylate, more preferably 68 to 78 % by weight of an aromatic vinyl compound, 16 to 22 % by weight of a vinyl cyanide compound, and 5 to 12 % by weight of an alkyl acrylate, still more preferably 70 to 75 % by weight of an aromatic vinyl compound, 18 to 21 % by weight of a vinyl cyanide compound, and 6 to 10 % by weight of an alkyl acrylate. In this case, since an alkyl acrylate is included in the graft shell, compatibility with the non-graft copolymer (B) may be excellent, and thus physical property balance, transparency, gloss, and weather resistance may be excellent.

For example, the refractive index difference between the rubber core of the graft copolymer (A) and the graft shell of the graft copolymer (A) may be 0.093 or less, preferably 0.090 or less, more preferably 0.070 to 0.090, still more preferably 0.080 to 0.090, still more preferably 0.082 to 0.088. Within this range, transparency, gloss, weather resistance, and impact resistance may be excellent.

In the present disclosure, for example, the aromatic vinyl compound may include one or more selected from the group consisting of styrene, α-methyl styrene, o-methyl styrene, ρ-methyl styrene, m-methyl styrene, ethyl styrene, isobutyl styrene, t-butyl styrene, o-bromostyrene, ρ-bromostyrene, m-bromostyrene, o-chlorostyrene, ρ-chlorostyrene, m-chlorostyrene, vinyltoluene, vinylxylene, fluorostyrene, and vinylnaphthalene, preferably styrene.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

In the present disclosure, for example, the alkyl acrylate may include an alkyl acrylate containing an alkyl group having 1 to 15 carbon atoms, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing an alkyl group having 1 to 4 carbon atoms, still more preferably n-butyl acrylate, 2-ethylhexyl acrylate, or a mixture thereof.

For example, the graft copolymer (A) satisfies both Equations 1 and 2 below. In this case, the thickness of the rubber core of the graft copolymer (A) having a large refractive index difference with the non-graft copolymer (B) may be reduced, and thus transparency, gloss, weather resistance, and impact resistance may be excellent.

[Equation 1]

$$180 \leq 2*r2 \leq 300$$

[Equation 2]

$$25 \leq r2-r1 \leq 45$$

In Equations 1 and 2, r1 is an average radius (mm) from the center of the graft copolymer to the polymer seed, and r2 is an average radius (nm) from the center of the graft copolymer to the core.

Equation 1 may be expressed as preferably 200 ≤ 2*r2 ≤ 280, more preferably 230 ≤ 2*r2 ≤ 260. Within this range, impact resistance may be excellent.

Equation 2 may be expressed as preferably 30 ≤ r2-r1 ≤ 40, more preferably 32 ≤ r2-r1 ≤ 37. Within this range, transparency may be excellent.

In addition, r1 may be a value obtained by dividing the average particle diameter of the seed by half, and r2 may be a value obtained by dividing the average particle diameter of the core including the seed by half.

r2-r1 means the thickness of the rubber core. As the thickness of the rubber core decreases, light transmittance increases. In this case, transparency and gloss may be improved.

In the present disclosure, the refractive index of each of the polymer seed, rubber core, and graft shell of the graft copolymer and the refractive index of the non-graft copolymer (B) may be calculated by Equation 3 below.

[Equation 3]

$$RI = \Sigma\ Wti * RIi$$

Wti = Weight fraction (%) of each component in copolymer
RIi = Refractive index of polymer of each component of copolymer

In the present disclosure, the refractive index of each component of the copolymer, i.e., the refractive index of the polymer of the monomer, is not particularly limited as long as the refractive index is a value commonly recognized in the art to which the present invention pertains. For example, methyl methacrylate may be 1.49, butyl acrylate may be 1.46, styrene may be 1.592, and acrylonitrile may be 1.52.

For example, the graft copolymer (A) may have a gel content of 70 to 98 % by weight, preferably 80 to 95 % by weight, more preferably 82 to 92 % by weight. Within this range, mechanical properties such as impact resistance may be excellent.

For example, the graft copolymer (A) may have a swelling index of 2.5 to 10, preferably 3 to 7, more preferably 4 to 6. Within this range, mechanical properties, such as impact resistance, and weather resistance may be excellent.

For example, the graft copolymer (A) may have a grafting degree of 30 % or more, preferably 35 to 70 %, more preferably 35 to 60 %. Within this range, mechanical properties, such as impact resistance, and weather resistance may be excellent.

In the present disclosure, when measuring gel content, swelling index, and grafting degree, 30 g of acetone is added to 0.5 g of a powdered graft copolymer, agitation is performed at 210 rpm and room temperature for 12 hours using a shaker (SKC-6075, Lab Companion Co.), centrifugation is performed at 18,000 rpm and 0 °C for 3 hours using a centrifuge (Supra R30, Hanil Science Co.) to separate only insoluble matter that is not dissolved in acetone, and the separated insoluble matter is dried via forced circulation at 85 °C for 12 hours using a forced convection oven (OF-12GW, Lab Companion Co.). Then, the weight of the dried insoluble matter is measured, and gel content, swelling index, and grafting degree are calculated by Equations 4, 5, and 6 below.

[Equation 4]

Gel content (wt%) = [Weight (g) of insoluble matter (gel) / Weight (g) of sample] × 100

[Equation 5]

Swelling index = Weight (g) of insoluble matter before drying after centrifugation / Weight (g) of insoluble matter after drying after centrifugation

[Equation 6]

Grafting degree (%) = [Weight (g) of grafted monomers / Weight (g) of rubber] × 100

In Equation 6, the weight (g) of grafted monomers is a value obtained by subtracting the weight (g) of rubber from the weight (g) of insoluble matter (gel) obtained by dissolving a graft copolymer in acetone and performing centrifugation, and the weight (g) of rubber is the weight (g) of rubber components theoretically included in the graft copolymer powder.

In the present disclosure, the room temperature may be a temperature in the range of 20 ± 5 °C.

For example, based on 100 % by weight in total of the graft copolymer (A), the graft copolymer (A) may include the polymer seed in an amount of 5 to 35 % by weight, preferably 10 to 30 % by weight, more preferably 15 to 25 % by weight. Within this range, impact resistance and physical property balance may be excellent. When the content of the polymer seed is less than the range, transparency may deteriorate. When the content of the polymer seed exceeds the range, impact resistance may deteriorate.

For example, based on 100 % by weight in total of the graft copolymer (A), the graft copolymer (A) may include the rubber core in an amount of 25 to 55 % by weight, preferably 30 to 50 % by weight, more preferably 35 to 45 % by weight. Within this range, impact resistance and physical property balance may be excellent. When the content of the rubber core is less than the range, the impact reinforcement effect of the graft copolymer may be reduced due to decrease in rubber content. When the content of the rubber core exceeds the range, agglomeration of rubber may occur during coagulation due to decrease in graft shell content, and compatibility with the non-graft copolymer (B) may be significantly reduced. As a result, the impact reinforcement effect may be reduced, and the desired degree of refractive index may not be obtained.

For example, based on 100 % by weight in total of the graft copolymer (A), the graft copolymer (A) may include the graft shell in an amount of 25 to 55 % by weight, preferably 30 to 50 % by weight, more preferably 35 to 45 % by weight. Within this range, impact resistance and physical property balance may be excellent. When the content of the graft shell is less than the range, due to low grafting efficiency, rubber may be agglomerated, and thus compatibility with the non-graft copolymer (B) may be reduced, thereby reducing the impact reinforcement effect. When the content of the graft shell exceeds the range, due to decrease in relative rubber content, impact resistance may be reduced.

For example, the core of the rubber component may be acrylic rubber obtained by polymerizing an alkyl acrylate, an aromatic vinyl compound, and a crosslinking agent. When the crosslinking agent is included, the gel content may be adjusted, and impact resistance may be excellent.

For example, the polymer seed, the rubber core, or both may include one or more selected from the group consisting of divinylbenzene, 1,3-butanediol diacrylate, 1,3-butanediol dimethacrylate, 1,4-butanediol diacrylate, 1,4-butanediol dimethacrylate, aryl acrylate, aryl methacrylate, trimethylolpropane triacrylate, tetraethyleneglycol diacrylate, ethyleneglycol dimethacrylate, diethyleneglycol dimethacrylate, triethyleneglycol dimethacrylate, neopentyl glycol dimethacrylate, triallyl isocyanurate, triarylamine, diallylamine, and a compound represented by Chemical Formula 1 below as the crosslinking agent.

[Chemical Formula 1]

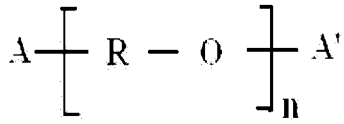

In Chemical Formula 1, A is independently a substituent having a vinyl group, or a (meth)acrylate group; A' is a hydrogen group, a substituent having a vinyl group, an alkyl group having 1 to 30 carbon atoms, an allylalkyl group having 5 to 24 carbon atoms, an arylamine group having 5 to 24 carbon atoms, or an allyl group having 6 to 30 carbon atoms; R is independently a divalent ethyl or propyl group; and n is an integer of 0 to 15 or 1 to 15, preferably 0 to 5 or 1 to 5, more preferably 0 to 4 or 1 to 4.

For example, based on 100 parts by weight in total of monomers used when each of the polymer seed, rubber core, and graft shell of the graft copolymer (A) is prepared, the crosslinking agent may be used in an amount of 0.001 to 3 parts by weight, preferably 0.05 to 1 part by weight.

In the present disclosure, the content of a monomer in a polymer may mean a content (% by weight) of the monomer fed when the polymer is prepared, or may mean a value (% by weight) calculated by converting a unit in the polymer into the monomer.

For example, a method of preparing the graft copolymer (A) may include step i) of preparing a polymer seed by including 45 to 72 % by weight of an alkyl acrylate and 28 to 55 % by weight of an aromatic vinyl compound; step ii) of preparing a rubber core by including 78 to 91 % by weight of an alkyl acrylate and 9 to 22 % by weight of an aromatic vinyl compound in the presence of the polymer seed; and step iii) of preparing a graft copolymer by graft-polymerizing 65 to 82 % by weight of an aromatic vinyl compound, 12 to 30 % by weight of a vinyl cyanide compound, and 3 to 15 % by weight of an alkyl acrylate in the presence of the rubber core. In this case, transparency, gloss, weather resistance, and impact resistance may be excellent.

The method of preparing the graft copolymer (A) preferably includes step i) of preparing a polymer seed by including 45 to 72 % by weight of an alkyl acrylate, 28 to 55 % by weight of an aromatic vinyl compound, an electrolyte, a crosslinking agent, an initiator, and an emulsifier; step ii) of preparing a rubber core by including 78 to 91 % by weight of an alkyl acrylate, 9 to 22 % by weight of an aromatic vinyl compound, a crosslinking agent, an initiator, and an emulsifier in the presence of the polymer seed; and step iii) of preparing a graft copolymer by graft-polymerizing 65 to 82 % by weight of an aromatic vinyl compound, 12 to 30 % by weight of a vinyl cyanide compound, 3 to 15 % by weight of an alkyl acrylate, a crosslinking agent, an initiator, and an emulsifier in the presence of the rubber core. In this case, transparency, gloss, and weather resistance may be excellent.

In steps i), ii), and iii), emulsifiers commonly used in the art to which the present invention pertains may be used as the emulsifier of the present invention, without particular limitation. For example, the emulsifier may include one or more selected from the group consisting of an alkyl sulfosuccinate metal salt having 12 to 18 carbon atoms or a derivative thereof, an alkyl sulfate ester having 12 to 20 carbon atoms or a derivative thereof, an alkyl sulfonic acid metal salt having 12 to 20 carbon atoms or a derivative thereof, fatty acid soap, and rosin acid soap.

The alkyl sulfosuccinate metal salt having 12 to 18 carbon atoms or the derivative thereof may include preferably one or more selected from the group consisting of dicyclohexyl sulfosuccinate, dihexyl sulfosuccinate, di-2-ethyl hexyl sulfosuccinate sodium salt, di-2-ethyl hexyl sulfosuccinate potassium salt, dioctyl sulfosuccinate sodium salt, and dioctyl sulfosuccinate potassium salt.

The alkyl sulfate ester having 12 to 20 carbon atoms or the derivative thereof and the alkyl sulfonic acid metal salt having 12 to 20 carbon atoms or the derivative thereof may include preferably one or more selected from the group consisting of sodium lauryl sulfate, sodium dodecyl sulfate, sodium dodecyl benzene sulfate, sodium octadecyl sulfate, sodium oleic sulfate, potassium dodecyl sulfate, and potassium octadecyl sulfate.

The fatty acid soap may include preferably one or more selected from the group consisting of sodium or potassium salts of oleic acid, stearic acid, lauric acid, and mixed fatty acids.

The rosin acid soap may be preferably abietate.

For example, based on 100 parts by weight in total of monomers used when each of the polymer seed, rubber core, and graft shell of the graft copolymer (A) is prepared, the emulsifier may be used in an amount of 0.01 to 5 parts by weight, preferably 0.1 to 4 parts by weight, more preferably 1 to 3 parts by weight.

In steps i), ii), and iii), the type of initiator is not particularly limited, but a radical initiator may be preferably used.

For example, the radical initiator may include one or more selected from the group consisting of inorganic peroxides, organic peroxides, peroxyketal peroxides, peroxycarbonate peroxides, and azo compounds.

The inorganic peroxides may include preferably one or more selected from the group consisting of sodium

persulfate, potassium persulfate, ammonium persulfate, potassium superphosphate, and hydrogen peroxide.

The organic peroxides may include one or more selected from the group consisting of t-butyl peroxide, cumene hydroperoxide, p-menthane hydroperoxide, di-t-butyl peroxide, dicumyl peroxide, t-butylcumyl peroxide, 2,5-dimethyl-2,5-di(t-butylperoxy)-hexane, di-t-amyl peroxide, 1,1-di(t-butylperoxy)-3,3,5-trimethylcyclohexane, 1,1-di(t-butylperoxy)-cyclohexane, 1,1-di(t-amylperoxy)-cyclohexane, ethyl 3,3-di(t-amylperoxy)-butyrate, diisopropylbenzene monohydroperoxide, t-amyl hydroperoxide, t-butyl hydroperoxide, t-butyl peroxyneodecanoate, t-butyl peroxypivalate, di-(3,3,5-trimethylhexanoyl)-peroxide, t-butyl peroxy-2-ethylhexanoate, t-butyl peroxy-3,3,5-trimethylhexanoyl, t-amyl peroxy neodecanoate, t-amyl peroxy pivalate, t-amyl peroxy-2-ethylhexanoate, t-butyl peroxyacetate, t-butyl peroxybenzoate, t-amyl peroxy 2-ethylhexyl carbonate, t-butyl peroxy 2-ethylhexyl carbonate, t-butyl peroxy isopropyl monocarbonate, t-butyl peroxy maleic acid, cumyl peroxyneodecanoate, 1,1,3,3,-tetramethylbutyl peroxy neodecanoate, 1,1,3,3,-tetramethylbutyl peroxy 2-ethylhexanoate, di-2-2ethylhexyl peroxydicarbonate, 3-hydroxy-1,1-dimethylbutylperoxyneodecanoate, acetyl peroxide, isobutyl peroxide, octanoyl peroxide, dibenzoyl peroxide, dilauroyl peroxide, 3, 5, 5-trimethylhexanol peroxide, and t-butyl peroxy isobutyrate.

The peroxyketal peroxides may include preferably one or more selected from the group consisting of 1,1-di(t-butylperoxy)-3,3,5-trimethylcyclohexane, 1,1-di(t-butylperoxy)cyclohexane, 1,1-di(t-amylperoxy)cyclohexane, ethyl-3,3-di(t-butylperoxy)butyrate, and ethyl-3,3-di(t-amylperoxy)butyrate.

The peroxycarbonate peroxides may include preferably one or more selected from the group consisting of dialkyl peroxides, such as dicumylperoxide, di(t-butylperoxy)-m/p-diisopropylbenzene, 2,5-dimethyl-2,5-(t-butylperoxy)hexane, t-butylcumyl peroxide, and 2,5-methyl-2,5-(t-butylperoxy)hexyne-3, t-butyl peroxy 2-ethylhexyl mono carbonate, and t-butyl peroxybenzoate.

The azo compounds may include preferably one or more selected from the group consisting of azobis isobutyronitrile, azobis-2,4-dimethylvaleronitrile, azobiscyclohexanecarbonitrile, and azobis isobutyric acid methyl.

In at least one of steps i), ii), and iii), in combination with the polymerization initiator, an activator may be preferably used to promote the initiation reaction of peroxides.

Activators commonly used in the art to which the present invention pertains may be used as the activator of the present invention without particular limitation.

Based on 100 parts by weight in total of the graft copolymer, the activator may be added in an amount of 0.01 to 3 parts by weight, preferably 0.01 to 1 part by weight. Within this range, a high degree of polymerization may be achieved.

For example, in steps i), ii), and iii), in combination with the initiator, an oxidation-reduction system catalyst may be used to further accelerate the initiation reaction.

For example, the oxidation-reduction system catalyst may include one or more selected from the group consisting of sodium pyrophosphate, dextrose, ferrous sulfide, sodium sulfite, sodium formaldehyde sulfoxylate, and sodium ethylenediaminetetraacetate, preferably a mixture of sodium pyrophosphate, dextrose, and ferrous sulfide, without being limited thereto.

For example, in step i), as the electrolyte, one or more selected from the group consisting of KCl, NaCl, KHCOs, NaHCOs, $K_2CO_3$, $Na_2CO_3$, $KHSO_3$, $NaHSO_4$, $Na_2S_2O_7$, $K_3P_2O_7$, $K_3PO_4$, $Na_3PO_4$, and $Na_2HPO_4$ may be used, without being limited thereto.

For example, in step iii), a molecular weight modifier may be included.

For example, based on 100 parts by weight in total of the graft copolymer, the molecular weight modifier may be included in an amount of 0.01 to 2 parts by weight, preferably 0.05 to 1.5 parts by weight, more preferably 0.05 to 1 part by weight. Within this range, a polymer having a desired molecular weight may be easily prepared.

For example, the molecular weight modifier may include one or more selected from the group consisting of $\alpha$-methylstyrene dimer, t-dodecyl mercaptan, n-dodecyl mercaptan, octyl mercaptan, carbon tetrachloride, methylene chloride, methylene bromide, tetra ethyl thiuram disulfide, dipentamethylene thiuram disulfide, and diisopropylxanthogen disulfide, without being limited thereto.

In the present disclosure, 100 parts by weight of the graft copolymer may mean the total weight of the finally obtained graft copolymer; the total weight of the monomers used in the preparation of the polymer seed, the rubber core, and the graft shell, considering that most of the added monomers are used for polymerization; or the total weight of the monomers added in the preparation of the polymer seed and the rubber core and the monomers added in the preparation of the graft shell.

For example, the graft copolymer (A) may be prepared by emulsion polymerization. In this case, chemical resistance, weather resistance, fluidity, tensile strength, and impact strength may be excellent.

Emulsion polymerization methods commonly practiced in the art to which the present invention pertains may be used in the present invention without particular limitation.

Polymerization temperature during the emulsion polymerization is not particularly limited, and for example, the emulsion polymerization may be performed at 50 to 85 °C, preferably 60 to 80 °C.

For example, the latex of the graft copolymer (A) may be prepared in the form of powder through a conventional process including coagulation, washing, and drying. As a specific example, a metal salt or an acid coagulant is added,

coagulation is performed at 60 to 100 °C, and aging, dehydration, washing, and drying are performed to prepare the latex of the graft copolymer (A) in powder form, but the present invention is not limited thereto.

For example, based on a total weight of the graft copolymer (A) and the non-graft copolymer (B), the graft copolymer (A) may be included in an amount of 10 to 90 % by weight, preferably 30 to 70 % by weight, more preferably 40 to 60 % by weight. Within this range, transparency, gloss, weather resistance, and impact resistance may be excellent.

(B) Non-graft copolymer including alkyl (meth)acrylate, aromatic vinyl compound, and vinyl cyanide compound

For example, the non-graft copolymer (B) may be a matrix resin, and may include an alkyl (meth)acrylate, an aromatic vinyl compound, and a vinyl cyanide compound, preferably 55 to 85 % by weight of an alkyl (meth)acrylate, 10 to 35 % by weight of an aromatic vinyl compound, and 1 to 20 % by weight of a vinyl cyanide compound. Within this range, compatibility with the graft copolymer (A) may be excellent, and transparency, gloss, weather resistance, and impact resistance may be excellent.

The non-graft copolymer (B) may preferably include 60 to 80 % by weight of an alkyl (meth)acrylate, 15 to 30 % by weight of an aromatic vinyl compound, and 1 to 15 % by weight of a vinyl cyanide compound. Within this range, compatibility with the graft copolymer (A) may be excellent, and transparency, gloss, and impact resistance may be excellent.

More preferably, the non-graft copolymer (B) may include 65 to 75 % by weight of an alkyl (meth)acrylate, 20 to 25 % by weight of an aromatic vinyl compound, and 5 to 10 % by weight of a vinyl cyanide compound. Within this range, compatibility with the graft copolymer (A) may be excellent, and transparency, gloss, weather resistance, and impact resistance may be excellent.

In the present disclosure, the term "non-graft copolymer" refers to a copolymer obtained without graft polymerization, and more specifically refers to a copolymer not grafted to rubber.

In the present disclosure, the alkyl (meth)acrylate may be defined as including both alkyl acrylate and alkyl methacrylate.

For example, the alkyl acrylate may include an alkyl acrylate containing an alkyl group having 1 to 15 carbon atoms, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing an alkyl group having 1 to 4 carbon atoms, still more preferably n-butyl acrylate, 2-ethylhexyl acrylate, or a mixture thereof.

For example, the alkyl methacrylate may be an alkyl methacrylate containing an alkyl group having 1 to 15 carbon atoms, and may preferably include one or more selected from the group consisting of methyl methacrylate, ethyl methacrylate, butyl methacrylate, 2-ethylbutyl methacrylate, 2-ethylhexylmethacrylate, and lauryl methacrylate, more preferably an alkyl methacrylate containing an alkyl group having 1 to 4 carbon atoms, still more preferably methyl methacrylate.

The types of the aromatic vinyl compound and vinyl cyanide compound included in the non-graft copolymer (B) may be the same as the types of the aromatic vinyl compound and vinyl cyanide compound included in the graft copolymer (A) of the present invention.

The non-graft copolymer (B) may be preferably a methyl methacrylate-styrene-acrylonitrile copolymer. In this case, the refractive index difference between the polymer seed of the graft copolymer (A) and the non-graft copolymer (B) may be reduced, and thus transparency and gloss may be excellent.

For example, the non-graft copolymer (B) may have a weight average molecular weight of 50,000 to 150,000 g/mol, preferably 60,000 to 130,000 g/mol, more preferably 70,000 to 100,000 g/mol. Within this range, impact resistance and moldability may be excellent.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 ul, column model: 1× PLgel 10 um MiniMix-B (250 × 4.6 mm) + 1× PLgel 10 um MiniMix-B (250 × 4.6 mm) + 1× PLgel 10 um MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the non-graft polymer (B) may be prepared by a method including a step i) of preparing a reaction mixture by mixing 100 parts by weight of a monomer mixture including 10 to 35 % by weight of an aromatic vinyl compound, 55 to 85 % by weight of an alkyl (meth)acrylate, and 1 to 20 % by weight of a vinyl cyanide compound and 25 to 35 parts by weight of a reaction medium; step ii) of adding 0.005 to 0.05 parts by weight of an organic peroxide initiator having

a bifunctional group to 100 parts by weight of the reaction mixture of step i); and step iii) of polymerizing the mixture containing the initiator of step ii).

In step iii), polymerization may be performed at 110 to 140 °C for 2 to 4 hours, and then additional polymerization may be performed at 120 to 160 °C for 2 to 4 hours.

In step i), the reaction medium may include, for example, one or more selected from the group consisting of ethylbenzene, toluene, and xylene, preferably toluene.

In step ii), the organic peroxide initiator having a bifunctional group may include, for example, one or more selected from the group consisting of cumene hydroperoxide, p-menthane hydroperoxide, di-t-butyl peroxide, dicumyl peroxide, t-butylcumyl peroxide, 1,1-bis(t-butylperoxy)-3,3,5-trimethylcyclohexane, 1,1-bis(t-butylperoxy)cyclohexane, and 1,1-bis(t-butylperoxy)2-methylcyclohexane. In this case, productivity may be excellent, and the advantage of reduced thermal discoloration may be obtained.

In step iii), an antioxidant may be included. For example, based on 100 parts by weight in total of the aromatic vinyl compound, the alkyl (meth)acrylate, and the vinyl cyanide compound, the antioxidant may be included in an amount of 0.05 to 1 part by weight, more preferably 0.1 to 0.5 parts by weight.

For example, the non-graft copolymer (B) may be prepared by solution polymerization, bulk polymerization, emulsion polymerization, or suspension polymerization, preferably bulk polymerization. Solution polymerization, bulk polymerization, emulsion polymerization, and suspension polymerization methods commonly practiced in the art to which the present invention pertains may be used in the present invention without particular limitation.

For example, based on a total weight of the graft copolymer (A) and the non-graft copolymer (B), the non-graft copolymer (B) may be included in an amount of 10 to 90 % by weight, preferably 30 to 70 % by weight, more preferably 40 to 60 % by weight. Within this range, transparency, gloss, weather resistance, and impact resistance may be excellent.

In the present disclosure, a polymer including a certain compound means a polymer prepared by polymerizing the compound, and a unit in the polymer is derived from the compound.

(C) Alkyl acrylate-aromatic vinyl compound-vinyl cyanide compound graft copolymer containing rubber core having average particle diameter of 50 to 150 nm

For example, the thermoplastic resin composition may include the alkyl acrylate-aromatic vinyl compound-vinyl cyanide compound graft copolymer (C) containing a rubber core having an average particle diameter of 50 to 150 nm. In this case, compatibility with the non-graft copolymer (B) may be excellent, and transparency, gloss, and weather resistance may be further improved.

The graft copolymer (C) may be preferably a graft copolymer including a rubber core having an average particle diameter of 50 to 150 nm and including 78 to 91 % by weight of an alkyl acrylate and 9 to 22 % by weight of an aromatic vinyl compound and a graft shell surrounding the rubber core and including 65 to 80 % by weight of an aromatic vinyl compound, 14 to 25 % by weight of a vinyl cyanide compound, and 3 to 15 % by weight of an alkyl acrylate. In this case, compatibility with the non-graft copolymer (B) may be excellent, impact resistance may be excellent, and transparency, gloss, and weather resistance may be further improved.

More preferably, the graft copolymer (C) may include a rubber core having an average particle diameter of 70 to 130 nm and including 80 to 90 % by weight of an alkyl acrylate and 10 to 20 % by weight of an aromatic vinyl compound and a graft shell surrounding the rubber core and including 67 to 77 % by weight of an aromatic vinyl compound, 14 to 22 % by weight of a vinyl cyanide compound, and 5 to 12 % by weight of an alkyl acrylate. In this case, compatibility with the non-graft copolymer (B) may be excellent, impact resistance may be excellent, and transparency, gloss, and weather resistance may be further improved.

Still more preferably, the graft copolymer (C) may include a rubber core having an average particle diameter of 80 to 110 nm and including 82 to 88 % by weight of an alkyl acrylate and 12 to 18 % by weight of an aromatic vinyl compound and a graft shell surrounding the rubber core and including 70 to 75 % by weight of an aromatic vinyl compound, 17 to 22 % by weight of a vinyl cyanide compound, and 5 to 10 % by weight of an alkyl acrylate. In this case, compatibility with the non-graft copolymer (B) may be excellent, impact resistance may be excellent, and transparency, gloss, and weather resistance may be further improved.

For example, the graft copolymer (C) may include 30 to 60 % by weight of a rubber core and 40 to 70 % by weight of a graft shell, preferably 35 to 55 % by weight of a rubber core and 45 to 65 % by weight of a graft shell, more preferably 40 to 50 % by weight of a rubber core and 50 to 60 % by weight of a graft shell. Within this range, mechanical properties may be excellent.

The types of the alkyl acrylate, aromatic vinyl compound, and vinyl cyanide compound included in the graft copolymer (C) may be the same as the types of the alkyl acrylate, aromatic vinyl compound, and vinyl cyanide compound included in the graft copolymer (A) of the present invention.

For example, a method of preparing the graft copolymer (C) may include step i) of preparing a rubber core by including 78 to 91 % by weight of an alkyl acrylate and 9 to 22 % by weight of an aromatic vinyl compound; and step ii)

of preparing a graft copolymer by graft-polymerizing 65 to 80 % by weight of an aromatic vinyl compound, 14 to 25 % by weight of a vinyl cyanide compound, and 3 to 15 % by weight of an alkyl acrylate in the presence of the rubber core. In this case, impact resistance, transparency, gloss, and weather resistance may be excellent.

Preferably, the method of preparing the graft copolymer (C) may include step i) of preparing a rubber core by including 78 to 91 % by weight of an alkyl acrylate, 9 to 22 % by weight of an aromatic vinyl compound, a crosslinking agent, an initiator, and an emulsifier; and step iii) of preparing a graft copolymer by graft-polymerizing 65 to 80 % by weight of an aromatic vinyl compound, 14 to 25 % by weight of a vinyl cyanide compound, 3 to 15 % by weight of an alkyl acrylate, a crosslinking agent, an initiator, and an emulsifier in the presence of the rubber core. In this case, transparency, gloss, and weather resistance may be excellent.

The types of the crosslinking agent, initiator, and emulsifier used in steps i) and/or ii) may be the same as the types of the crosslinking agent, initiator, and emulsifier used in the emulsion polymerization step of the graft copolymer (A) of the present invention.

For example, based on 100 % by weight in total of the graft copolymer (A), the non-graft copolymer (B), and the graft copolymer (C), a total weight of the graft copolymer (A) and the graft copolymer (C) may be 10 to 90 % by weight, preferably 30 to 70 % by weight, more preferably 40 to 60 % by weight. Within this range, transparency, gloss, weather resistance, and impact resistance may be excellent.

For example, a weight ratio (A:C) of the graft copolymer (A) to the graft copolymer (C) may be 5:5 to 8:2, preferably 5.5:4.5 to 7.5:2.5, more preferably 5.5:4.5 to 7:3, still more preferably 5.5:4.5 to 6.5:3.5. Within this range, transparency, gloss, heat resistance, and impact resistance may be excellent.

Thermoplastic resin composition

When acetone is added to the thermoplastic resin composition, and stirring and centrifugation are performed to separate a gel as an insoluble matter and a sol as a soluble matter, the refractive index difference between the gel and the sol may be 0.006 or less, preferably 0.004 or less, more preferably 0.003 or less, still more preferably 0.002 or less, still more preferably 0.001 to 0.002. Within this range, transparency, gloss, and weather resistance may be further improved.

In the present disclosure, specifically, when measuring the refractive index difference between the sol and gel of the thermoplastic resin composition, 30 g of acetone is added to 0.5 g of thermoplastic resin composition pellets, stirring is performed at 210 rpm and room temperature for 12 hours using a shaker (SKC-6075, Lab Companion Co.), and centrifugation is performed at 18,000 rpm and 0 °C for 3 hours using a centrifuge (Supra R30, Hanil Science Co.) to separate a gel insoluble in acetone and a sol soluble in acetone. Then, the gel and the sol are dried via forced circulation at 85 °C for 12 hours using a forced convection oven (OF-12GW, Lab Companion Co.), and the refractive indexes of the gel and the sol are measured according to ASTM D542.

In the present disclosure, specifically, the refractive index is measured at room temperature using an Abbe refractometer according to ASTM D542.

By controlling the refractive index between the sol and the gel in the thermoplastic resin composition within the range, a resin composition having excellent transparency and gloss may be provided.

The thermoplastic resin composition may have a haze of preferably 10 % or less, more preferably 7 % or less, still more preferably 5 % or less, still more preferably 3 % or less, still more preferably 2.6 % or less, still more preferably 2.4 % or less, still more preferably 2.1 % or less, most preferably 0.5 to 2.1 % as measured using a 3 mm thick injection specimen according to ASTM D1003. Within this range, physical property balance may be excellent.

The thermoplastic resin composition may have a haze of preferably 3 % or less, more preferably 2.5 % or less, still more preferably 2 % or less, still more preferably 1.7 % or less, still more preferably 1.5 % or less, still more preferably 0.5 to 1.5 % as measured using an extrusion specimen having a thickness of 0.15 mm according to ASTM D1003. Within this range, physical property balance may be excellent.

In the present disclosure, specifically, the hazes of an injection specimen having a thickness of 3 mm and an extrusion specimen having a thickness of 0.15 mm are measured using a haze meter (HM-150, MURAKAMI Co.) according to ASTM D1003. As a haze value decreases, transparency increases.

The thermoplastic resin composition may have a gloss of preferably 122 or more, more preferably 130 or more, still more preferably 140 or more, still more preferably 145 or more, still more preferably 145 to 160 as measured at 45° using an injection specimen having a thickness of 3 mm according to ASTM D2457. Within this range, physical property balance may be excellent.

The thermoplastic resin composition may have a gloss of preferably 120 or more, more preferably 130 or more, still more preferably 135 or more, still more preferably 135 to 155 as measured at 60° using an extrusion specimen having a thickness of 0.15 mm according to ASTM D2457. Within this range, physical property balance may be excellent.

The thermoplastic resin composition may have an Izod impact strength of preferably 10 kgf-cm/cm or more, more preferably 12 kgf-cm/cm or more, still more preferably 14 kgf-cm/cm or more, still more preferably 16 kgf-cm/cm

or more, still more preferably 16 to 20 kgf·cm/cm as measured at room temperature using a 1/4" thick specimen according to ASTM D256. Within this range, physical property balance may be excellent.

After leaving a specimen for 3,000 hours in an accelerated weathering tester (Weather-O-Meter, Ci4000, ATLAS Co., xenon arc lamp, Quartz (inner)/S.Boro (outer) filters, irradiance of $0.55W/m^2$ at 340 nm) according to SAE J1960, when the degree of discoloration is measured using a color difference meter, and weather resistance (ΔE) is calculated by Equation 7 below, the thermoplastic resin composition may have a weather resistance (ΔE) of preferably 2.7 or less, more preferably 2.5 or less, still more preferably 2.3 or less, still more preferably 0.1 to 2.3. Within this range, physical property balance may be excellent.

ΔE below is an arithmetic mean value of L, a, and b values of the specimen measured by the CIE LAB color coordinate system before and after the accelerated weathering test. Weather resistance increases as the value of ΔE approaches zero.

[Equation 7]

$$\Delta E=\sqrt{(L'-L_0)^2+(a'-a_0)^2+(b'-b_0)^2}$$

In Equation 7, L', a', and b' represent L, a, and b values measured using the CIE LAB color coordinate system after leaving a specimen for 3,000 hours according to SAE J1960, respectively. $L_0$, $a_0$, and $b_0$ represent L, a, and b values measured using the CIE LAB color coordinate system before leaving the specimen, respectively.

For example, the thermoplastic resin composition may include one or more selected from the group consisting of a lubricant, an antioxidant, and a UV absorber.

For example, the lubricant may include one or more selected from the group consisting of ethylene bis stearamide, oxidized polyethylene wax, magnesium stearate, calcium stearamide, and stearic acid. In this case, heat resistance and fluidity may be improved.

For example, based on 100 parts by weight in total of the graft copolymer (A) and the non-graft copolymer (B), the lubricant may be included in an amount of 0.01 to 3 parts by weight, preferably 0.05 to 2 parts by weight.

For example, the antioxidant may include a phenolic antioxidant, a phosphorus antioxidant, or a mixture thereof, preferably a phenolic antioxidant. In this case, oxidation by heat may be prevented during an extrusion process, and mechanical properties and heat resistance may be excellent.

For example, based on 100 parts by weight in total of the graft copolymer (A) and the non-graft copolymer (B), the antioxidant may be included in an amount of 0.01 to 3 parts by weight, preferably 0.05 to 2 parts by weight. Within this range, physical property balance may be excellent, and heat resistance may be improved.

For example, the UV absorber may include one or more selected from the group consisting of a triazine-based UV absorber, a benzophenone-based UV absorber, a benzotriazole-based UV absorber, a benzoate-based UV absorber, and a cyanoacrylate-based UV absorber, without being limited thereto.

For example, based on 100 parts by weight in total of the graft copolymer (A) and the non-graft copolymer (B), the UV absorber may be included in an amount of 0.01 to 3 parts by weight, preferably 0.05 to 2 parts by weight. In this case, physical property balance may be excellent, and light resistance may be improved.

For example, the thermoplastic resin composition may include one or more additives selected from the group consisting of a flame retardant, a flame retardant aid, a fluorescent brightening agent, an antistatic agent, a chain extender, a release agent, a pigment, a dye, an antibacterial agent, a processing aid, a metal deactivator, a smoke inhibitor, an inorganic filler, glass fiber, an anti-friction agent, and an anti-wear agent.

For example, based on 100 parts by weight in total of the graft copolymer (A) and the non-graft copolymer (B), each additive may be included in an amount of 0.01 to 5 parts by weight, preferably 0.1 to 3 parts by weight, more preferably 0.1 to 1 part by weight. In this case, physical properties may be improved, and economic efficiency may be improved by reducing manufacturing costs.

Hereinafter, a method of preparing the thermoplastic resin composition of the present invention and a molded article including the thermoplastic resin composition will be described. In describing the method of preparing the thermoplastic resin composition of the present invention and the molded article including the thermoplastic resin composition, all contents of the above-mentioned thermoplastic resin composition are included.

Method of preparing thermoplastic resin composition

A method of preparing the thermoplastic resin composition of the present invention includes a step of kneading and extruding, at 180 to 300 °C and 80 to 400 rpm, an alkyl acrylate-aromatic vinyl compound-vinyl cyanide compound

graft copolymer (A) including a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and a non-graft copolymer (B) including an alkyl (meth)acrylate, an aromatic vinyl compound, and a vinyl cyanide compound, wherein the graft copolymer (A) satisfies both Equations 1 and 2 below. In this case, transparency, gloss, and impact resistance may be excellent.

[Equation 1]

$$180 \leq 2*r2 \leq 300$$

[Equation 2]

$$25 \leq r2-r1 \leq 45$$

In Equations 1 and 2, r1 is the thickness (nm) from the center of the graft copolymer to the polymer seed, and r2 is the thickness (nm) from the center of the graft copolymer to the rubber core.

In the step of kneading and extruding, an alkyl acrylate-aromatic vinyl compound-vinyl cyanide compound graft copolymer (C) having an average particle diameter of 50 to 150 nm may be included. More preferably, an alkyl acrylate-aromatic vinyl compound-vinyl cyanide compound graft copolymer (C) including a rubber core having an average particle diameter of 50 to 150 nm and including 78 to 91 % by weight of an alkyl acrylate and 9 to 22 % by weight of an aromatic vinyl compound and a graft shell surrounding the rubber core and including 65 to 80 % by weight of an aromatic vinyl compound, 14 to 25 % by weight of a vinyl cyanide compound, and 3 to 15 % by weight of an alkyl acrylate may be included. In this case, impact resistance may be excellent, and transparency and gloss may be greatly improved.

For example, the kneading and extrusion may be performed using a single-screw extruder, a twin-screw extruder, or a Banbury mixer. In this case, since the composition is uniformly dispersed, compatibility may be excellent.

For example, the kneading and extrusion may be performed at a barrel temperature of 180 to 300 °C, preferably 190 to 280 °C, more preferably 200 to 260 °C. In this case, throughput per unit time may be adequate, and melt-kneading may be sufficiently performed. In addition, thermal decomposition of a resin component may be prevented.

For example, the kneading and extrusion may be performed at a screw rotation rate of 80 to 400 rpm, preferably 100 to 300 rpm, more preferably 150 to 250 rpm. In this case, due to appropriate throughput per unit time, process efficiency may be excellent.

For example, the thermoplastic resin composition obtained through extrusion may be made into pellets using a pelletizer.

In addition, the resin composition may be manufactured into molded articles used in various industrial fields through molding processes such as a blow process and an injection process.

## Molded article

For example, a molded article of the present invention may include the thermoplastic resin composition of the present invention. In this case, the molded article may have excellent transparency, gloss, weather resistance, and impact resistance, and thus may be applied to high-quality products requiring transparency.

For example, the molded article may be an injection-molded article, a film, or a sheet. In this case, by the thermoplastic resin composition of the present invention, impact resistance, transparency, weather resistance, and gloss beyond the levels required in the market may be provided.

The molded article may be an automotive interior material, an automotive exterior material, a building material, a home appliance, or a medical part. In this case, transparency, gloss, weather resistance, and impact resistance required in the market may be provided.

A method of manufacturing the molded article includes preferably a step of preparing pellets by kneading and extruding, at 180 to 300 °C and 80 to 400 rpm, an alkyl acrylate-aromatic vinyl compound-vinyl cyanide compound graft copolymer (A) including a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30

% by weight of a vinyl cyanide compound, and 3 to 15 % by weight of an alkyl acrylate and a non-graft copolymer (B) including an alkyl (meth)acrylate, an aromatic vinyl compound, and a vinyl cyanide compound; and a step of injecting or extruding the prepared pellets using an injection machine or an extruder, wherein the graft copolymer (A) satisfies both Equations 1 and 2 below. In this case, the molded article may have excellent transparency, gloss, weather resistance, and impact resistance, and thus may be applied to high-quality products requiring transparency.

[Equation 1]

$$180 \leq 2*r2 \leq 300$$

[Equation 2]

$$25 \leq r2-r1 \leq 45$$

In Equations 1 and 2, r1 is the average radius (nm) from the center of the graft copolymer to the polymer seed, and r2 is the average radius (nm) from the center of the graft copolymer to the rubber core.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Materials used in examples and comparative examples are as follows.

* Graft copolymer (A): Graft copolymers (A) were prepared in Examples 1 to 10 and Comparative Examples 1 to 10 below.
* SAMMA copolymer (B-1): A methyl methacrylate-styrene-acrylonitrile non-graft copolymer including 71 % by weight of methyl methacrylate, 22 % by weight of styrene, and 7 % by weight of acrylonitrile
* SAN copolymer (B-2): A styrene-acrylonitrile non-graft copolymer (styrene: 73 % by weight, acrylonitrile: 27 % by weight)
* Graft copolymer (C): A graft copolymer (rubber core: 45 % by weight and graft shell: 55 % by weight) including a rubber core including 85 % by weight of butyl acrylate and 15 % by weight of styrene and having an average particle diameter of 90 mm and a graft shell surrounding the rubber core and including 72 % by weight of styrene, 20 % by weight of acrylonitrile, and 8 % by weight of butyl acrylate
* Lubricant: SUNLUBE EBS (SEONGU Co.)
* Antioxidant: Songnox 1076 (SONGWON Co.) and Irgafos 168 (BASF Co.)
* UV absorber: Tinuvin 770 (BASF Co.), Tinuvin P (BASF Co.)

<u>Example 1</u>

An acrylate-styrene-acrylonitrile graft copolymer (A) was prepared by including 60 % by weight of butyl acrylate (hereinafter referred to as "BA") and 40 % by weight of styrene (hereinafter referred to as "SM") as a polymer seed; 87 % by weight of BA and 13 % by weight of SM as a rubber core; and 72 % by weight of SM, 20 % by weight of acrylonitrile (hereinafter referred to as "AN"), and 8 % by weight of BA as a graft shell. At this time, the graft copolymer (A) included 20 % by weight of the polymer seed, 40 % by weight of the rubber core, and 40 % by weight of the graft shell.

50 parts by weight of the prepared graft copolymer (A), 50 parts by weight of the SAMMA copolymer (B-1), 1 part by weight of a lubricant, 1 part by weight of an antioxidant, and 0.6 parts by weight of a UV stabilizer were mixed, and then kneaded and extruded at 220 °C and 200 rpm to prepare pellets. The prepared pellets were injected at a molding temperature of 220 °C to obtain an injection specimen for measuring physical properties. In addition, the prepared pellets were extruded at 220 °C and 200 rpm using a single-screw film extruder to obtain an extrusion specimen for measuring physical properties.

Examples 2 to 4 and Examples 7 to 10

The same procedure as in Example 1 was performed except that graft copolymers (A) polymerized according to the components and contents shown in Tables 1 and 2 below were used instead of the graft copolymer (A) of Example 1.

Example 5

The same procedure as in Example 1 was performed except that 30 parts by weight of the graft copolymer (A) and 20 parts by weight of the graft copolymer (C) were used instead of 50 parts by weight of the graft copolymer (A) prepared in Example 1.

Example 6

The same procedure as in Example 1 was performed except that 35 parts by weight of the graft copolymer (A) and 15 parts by weight of the graft copolymer (C) were used instead of 50 parts by weight of the graft copolymer (A) prepared Example 1.

Comparative Examples 1 to 9

The same procedure as in Example 1 was performed except that graft copolymers (A) polymerized according to the components and contents shown in Tables 3 and 4 below were used instead of the graft copolymer (A) of Example 1.

Comparative Example 10

The same procedure as in Example 1 was performed except that the SAN copolymer (B-2) was used instead of the SAMMA copolymer (B-1) of Example 1.

Comparative Example 11

A transparent acrylonitrile-butadiene-styrene resin (LG Chemical Co., TR557) was injected to obtain an injection specimen for measuring physical properties.

[Test Examples]

The properties of the pellets and specimens prepared in Examples 1 to 10 and Comparative Examples 1 to 11 were measured by the following methods, and the results are shown in Tables 1 to 4 below.

* The refractive indexes of the seed, core, and shell of the graft copolymer (A) and the refractive index of the non-graft copolymer (B) were calculated by Equation 3 below.

[Equation 3]

$$RI = \Sigma\ Wti * RIi$$

Wti = Weight fraction (%) of each component in copolymer
RIi = Refractive index of polymer of each component of copolymer

* Average particle diameters (nm) of polymer seed, rubber core, and graft shell: For each of the polymer seed, the rubber core, and the graft shell, upon completion of preparation thereof, a sample was obtained, and the average particle diameter of the sample was measured by dynamic light scattering. Specifically, the average particle diameter was measured as an intensity value using a Nicomp 380 particle size analyzer (manufacturer: PSS) in a Gaussian mode. As a specific measurement example, a sample was prepared by diluting 0.1 g of latex (total solids content: 35 to 50 wt%) 1,000 to 5,000-fold with distilled water. Then, the average particle diameter of the sample was measured using a flow cell in auto-dilution in a measurement mode of dynamic light scattering/intensity 300 kHz/intensity-weight Gaussian analysis. At this time, setting values were as follows: temperature: 23 °C and measurement wavelength: 632.8 nm.

For reference, r1 is a value obtained by dividing the average particle diameter of the seed by half, and r2 is a value obtained by dividing the average particle diameter of the core including the seed by half.

* Izod impact strength (IMP; kgf·cm/cm): Izod impact strength was measured at room temperature (20 ± 5 °C) using a 1/4" thick injection specimen according to ASTM D256.
* Haze (%): Haze values of a 3 mm thick injection specimen and a 0.15 mm thick extrusion specimen were measured according to ASTM D1003. As haze decreases, transparency increases.
* Gloss of injection specimen: Gloss was measured at 45° using an injection specimen having a thickness of 3 mm according to ASTM D2457.
* Gloss of extrusion specimen: Gloss was measured at 60° using an extrusion specimen having a thickness of 0.15 mm according to ASTM D2457.
* Refractive index difference between sol and gel in thermoplastic resin composition: 30 g of acetone was added to 0.5 g of thermoplastic resin composition pellets, stirring was performed at 210 rpm and room temperature for 12 hours using a shaker (SKC-6075, Lab Companion Co.), and centrifugation was performed at 18,000 rpm and 0 °C for 3 hours using a centrifuge (Supra R30, Hanil Science Co.) to separate a gel insoluble in acetone and a sol soluble in acetone. Then, the gel and the sol were dried via forced circulation at 85 °C for 12 hours using a forced convection oven (OF-12GW, Lab Companion Co.), and the refractive indexes of the gel and the sol were measured at room temperature (20 ± 5 °C) using an Abbe refractometer according to ASTM D542. Then, a difference in the refractive indexes was calculated.
* Weather resistance (△E): After leaving an specimen for 3,000 hours in an accelerated weathering tester (Weather-O-Meter, Ci4000, ATLAS Co., xenon arc lamp, Quartz (inner)/S.Boro (outer) filters, irradiance of 0.55W/m$^2$ at 340 nm) according to SAE J1960, the degree of discoloration was measured using a color difference meter, and weather resistance (ΔE) was calculated by Equation 7 below. ΔE below is an arithmetic mean value of L, a, and b values of the specimen measured by the CIE LAB color coordinate system before and after the accelerated weathering test. Weather resistance increases as the value of ΔE approaches zero.

[Equation 7]

$$\Delta E=\sqrt{(L'-L_0)^2+(a'-a_0)^2+(b'-b_0)^2}$$

In Equation 7, L', a', and b' represent L, a, and b values measured using the CIE LAB color coordinate system after leaving a specimen for 3,000 hours according to SAE J1960, respectively. $L_0$, $a_0$, and $b_0$ represent L, a, and b values measured using the CIE LAB color coordinate system before leaving the specimen, respectively.

[Table 1]

| Classification | | | Example 1 | Example 2 | Example 3 | Example 4 | Example 5 | Example 6 |
|---|---|---|---|---|---|---|---|---|
| (A) Gra ft cop oly mer | Seed | BA/SM (wt%) | 60/40 | 60/40 | 55/45 | 65/35 | 60/40 | 60/40 |
| | Core | BA/SM (wt%) | 87/13 | 85/15 | 87/13 | 87/13 | 87/13 | 87/13 |
| | Shell | SM/AN/BA (wt%) | 72/20/8 | 72/20/8 | 72/20/8 | 72/20/8 | 72/20/8 | 72/20/8 |
| | 2*r2 (nm) | | 240 | 240 | 240 | 240 | 240 | 240 |
| | r2-r1 (nm) | | 35 | 35 | 35 | 35 | 35 | 35 |
| | Refractive index difference between core and shell | | 0.088 | 0.086 | 0.088 | 0.088 | 0.088 | 0.088 |
| The rmo pla sti c res in com pos iti on | (A) Graft copolymer (wt%) | | 50 | 50 | 50 | 50 | 30 | 35 |
| | (B-1) SAMMA copolymer (wt%) | | 50 | 50 | 50 | 50 | 50 | 50 |
| | (C) Graft copolymer (wt%) | | - | - | - | - | 20 | 15 |
| Refractive index difference between seed of graft copolymer (A) and non-graft copolymer (B) | | | 0.002 | 0.002 | 0.004 | 0.008 | 0.002 | 0.002 |
| Injection specimen | | Haze (%) | 2.6 | 2.8 | 2.5 | 2.4 | 1.9 | 1.8 |
| | | IMP (kgf·cm/cm) | 16 | 13 | 16 | 16 | 15 | 15 |
| | | Gloss | 144 | 142 | 143 | 143 | 148 | 150 |
| | Weather resistance (ΔE) | 2.2 | 2.3 | 2.2 | 2.4 | 2.1 | 2 | |
| Extrusion specimen | Haze (%) | 1.6 | 1.8 | 1.5 | 1.5 | 1.4 | 1.4 | |
| | Gloss | 136 | 135 | 134 | 135 | 137 | 135 | |
| Refractive index difference between sol and gel in thermoplastic resin composition | | 0.0020 | 0.0018 | 0.0019 | 0.0039 | 0.0025 | 0.0021 | |

[Table 2]

| Classification | | | Example 7 | Example 8 | Example 9 | Example 10 |
|---|---|---|---|---|---|---|
| (A) Graft copolymer | Seed | BA/SM (wt%) | 60/40 | 60/40 | 60/40 | 60/40 |
| | Core | BA/SM (wt%) | 87/13 | 87/13 | 87/13 | 87/13 |
| | Shell | SM/AN/BA (wt%) | 76/16/8 | 71/18/11 | 71/24/5 | 68/22/10 |
| | 2*r2 (nm) | | 240 | 240 | 240 | 240 |
| | r2-r1 (nm) | | 35 | 35 | 35 | 35 |
| | Refractive index difference between core and shell | | 0.090 | 0.085 | 0.089 | 0.084 |
| Thermoplastic resin composition | (A) Graft copolymer (wt%) | | 50 | 50 | 50 | 50 |
| | (B-1) Non-graft copolymer (wt%) | | 50 | 50 | 50 | 50 |
| | (C) Graft copolymer (wt%) | | - | - | - | - |
| Refractive index difference between seed of graft copolymer (A) and non-graft copolymer (B) | | | 0.002 | 0.002 | 0.002 | 0.002 |
| Injection specimen | | Haze (%) | 3.0 | 3.0 | 2.8 | 3.3 |
| | | IMP (kgf·cm/cm) | 16 | 16 | 15 | 17 |
| | | Gloss | 143 | 144 | 146 | 141 |
| | | Weather resistance (ΔE) | 2.4 | 2.5 | 2.6 | 2.1 |
| Extrusion specimen | | Haze (%) | 1.8 | 1.7 | 1.9 | 1.8 |
| | | Gloss | 136 | 133 | 135 | 133 |
| Refractive index difference between sol and gel in thermoplastic resin composition | | | 0.0030 | 0.0016 | 0.0027 | 0.0020 |

[Table 3]

| Classification | | | Comparative Example 1 | Comparative Example 2 | Comparative Example 3 | Comparative Example 4 | Comparative Example 5 |
|---|---|---|---|---|---|---|---|
| (A) Graft copolymer | Seed | BA/SM (wt%) | 20/80 | 80/20 | 60/40 | 60/40 | 60/40 |
| | Core | BA/SM (wt%) | 87/13 | 87/13 | 95/5 | 70/30 | 87/13 |
| | shell | SM/AN/BA (wt%) | 72/20/8 | 72/20/8 | 72/20/8 | 72/20/8 | 72/8/20 |
| | 2*r2 (nm) | | 240 | 240 | 240 | 240 | 240 |
| | r2-r1 (nm) | | 35 | 35 | 35 | 35 | 35 |
| | Refractive index difference between core and shell | | 0.088 | 0.088 | 0.099 | 0.066 | 0.081 |

(continued)

| Classification | | Comparative Example 1 | Comparative Example 2 | Comparative Example 3 | Comparative Example 4 | Comparative Example 5 |
|---|---|---|---|---|---|---|
| Thermoplastic resin composition | (A) Graft copolymer (wt%) | 50 | 50 | 50 | 50 | 50 |
| | (B-1) SAMMA copolymer (wt%) | 50 | 50 | 50 | 50 | 50 |
| | (C) Graft copolymer (wt%) | - | - | - | - | - |
| Refractive index difference between seed of graft copolymer (A) and non-graft copolymer (B) | | 0.050 | 0.028 | 0.002 | 0.002 | 0.002 |
| Injection specimen | Haze (%) | 40.2 | 25.5 | 43.5 | 37.0 | 41.1 |
| | IMP (kgf·cm/cm) | 7 | 17 | 18 | 5 | 9 |
| | Gloss | 96 | 99 | 93 | 96 | 90 |
| | Weather resistance (ΔE) | 3.0 | 3.1 | 2.8 | 2.8 | 2.9 |
| Extrusion specimen | Haze (%) | 4.8 | 5.1 | 3.7 | 4.8 | 4.3 |
| | Gloss | 95 | 99 | 95 | 98 | 85 |
| Refractive index difference between sol and gel in thermoplastic resin composition | | 0.0156 | 0.0085 | 0.0101 | 0.0118 | 0.0093 |

[Table 4]

| Classification | | | Compara tive Example 6 | Compara tive Example 7 | Compara tive Example 8 | Compara tive Example 9 | Compara tive Example 10 | Compara tive Example 11 |
|---|---|---|---|---|---|---|---|---|
| (A) Gra ft cop oly mer | Seed | BA/SM (wt%) | 60/40 | 60/40 | 60/40 | 100/0 | 60/40 | - |
| | Core | BA/SM (wt%) | 87/13 | 87/13 | 87/13 | 100/0 | 87/13 | - |
| | Shell | SM/AN/BA (wt%) | 75/25/0 | 72/20/8 | 72/20/8 | 75/25/0 | 72/20/8 | - |
| | 2*r2 (nm) | | 240 | 360 | 160 | 240 | 240 | - |
| | r2-r1 (nm) | | 35 | 53 | 23 | 35 | 35 | - |
| | Refractive index difference between core and shell | | 0.096 | 0.088 | 0.088 | 0.113 | 0.088 | - |
| The rmo pla sti c res in com pos iti on | (A) Graft copolymer (wt%) | | 50 | 50 | 50 | 50 | 50 | - |
| | (B-1) SAMMA copolymer (wt%) | | 50 | 50 | 50 | 50 | | - |
| | (B-2) SAN copolymer (wt%) | | | | | | 50 | - |
| | (C) Graft copolymer (wt%) | | | | | | | - |
| Refractive index difference between seed of graft copolymer (A) and non-graft copolymer (B) | | | 0.002 | 0.002 | 0.002 | 0.054 | 0.058 | - |
| Injection specimen | | Haze (%) | 53.4 | 13.0 | 2.1 | 59.8 | 58.4 | 2.0 |
| | | IMP (kgf·cm/cm) | 11 | 17 | 7 | 18 | 13 | 17 |
| | | Gloss | 91 | 114 | 151 | 92 | 91 | 150 |
| | Weather resistance (ΔE) | 2.8 | 2.3 | 2 | 2.6 | 3.5 | 8.5 | |
| Extrusion specimen | Haze (%) | 5.6 | 2.5 | 1.4 | 6.5 | 7.1 | - | |
| | Gloss | 83 | 108 | 138 | 94 | 87 | - | |
| Refractive index difference between sol and gel in thermoplastic resin composition | | 0.0135 | 0.0021 | 0.0023 | 0.0261 | 0.0457 | - | |

As shown in Tables 1 to 4, compared to Comparative Examples 1 to 11, the thermoplastic resin compositions (Examples 1 to 10) according to the present invention have excellent impact strength, haze, weather resistance, and gloss.

In particular, Examples 5 and 6 including the graft copolymer (C) exhibit excellent impact strength, haze, gloss, and weather resistance.

On the other hand, in the case of Comparative Examples 1 and 2 in which the composition ratio of the polymer seed of the graft copolymer (A) is outside the range of the present invention, the refractive index difference between the seed and the SAMMA copolymer (B-1) and the refractive index difference between a sol and a gel in the thermoplastic resin composition are large. As a result, in both injection and extrusion specimens, haze, gloss, and weather resistance are poor. In particular, in the case of Comparative Example 1, impact strength is also reduced.

In addition, in the case of Comparative Examples 3 and 4 in which the composition ratio of the rubber core of the graft copolymer (A) is outside of the range of the present invention, the refractive index difference between the rubber core and graft shell of the graft copolymer (A) and/or the refractive index difference between a sol and a gel in the thermoplastic resin composition are large. As a result, in both injection and extrusion specimens, haze, gloss, and weather resistance are poor. In particular, in the case of Comparative Example 4, impact strength is also poor.

In addition, in the case of Comparative Examples 5 and 6 in which the composition ratio of the graft shell of the graft copolymer (A) is outside of the range of the present invention, the refractive index difference between a sol and a gel in the thermoplastic resin composition and/or the refractive index difference between the rubber core and graft shell of the graft copolymer (A) are large. As a result, in both injection and extrusion specimens, haze, gloss, and weather resistance are poor.

In addition, in the case of Comparative Example 7 in which the 2*r2 and r2-r1 of the rubber core of the graft copolymer (A) exceed the range of the present invention, in injection and extrusion specimens, haze and/or gloss are poor.

In addition, in the case of Comparative Example 8 in which the 2*r2 and r2-r1 of the rubber core of the graft copolymer (A) are less than the range of the present invention, impact strength is greatly reduced.

In addition, in the case of Comparative Example 9 in which only butyl acrylate is included in the seed and core, and styrene and acrylonitrile are included in the shell as in the conventional technique, the refractive index difference between the core and shell of the graft copolymer (A), the refractive index difference between the polymer seed of the graft copolymer (A) and the SAMMA copolymer (B-1), and the refractive index difference between a sol and a gel in the thermoplastic resin composition are large. As a result, in both injection and extrusion specimens, haze and gloss are poor.

In addition, in the case of Comparative Example 10 in which the SAN copolymer (B-2) is used instead of the SAMMA copolymer (B-1), the refractive index difference between the polymer seed of the graft copolymer (A) and the SAN copolymer (B-2) is large. As a result, in both injection and extrusion specimens, haze and gloss are poor, and weather resistance is very poor.

In addition, in the case of Comparative Example 11 including the transparent acrylonitrile-butadiene-styrene resin, weather resistance is very poor.

In conclusion, according to the present invention, when the composition ratio of the polymer seed, core, and shell constituting the alkyl acrylate-aromatic vinyl compound-vinyl cyanide compound graft copolymer (A) is adjusted within a predetermined range, and the refractive index difference between the core and the shell and the refractive index difference between the polymer seed of the graft copolymer (A) and the non-graft copolymer (B) are reduced, impact resistance, transparency, and gloss may be excellent.

## Claims

1. A thermoplastic resin composition, comprising:

   an alkyl acrylate-aromatic vinyl compound-vinyl cyanide compound graft copolymer (A) comprising a seed, a rubber core surrounding the seed, and a graft shell surrounding the rubber core; and
   a non-graft copolymer (B) comprising an alkyl (meth)acrylate, an aromatic vinyl compound, and a vinyl cyanide compound,
   wherein the graft copolymer (A) satisfies Equation 1 below;
   when acetone is added to the thermoplastic resin composition and stirring and centrifugation are performed so that the thermoplastic resin composition is separated into a sol and a gel, a refractive index difference between the sol and the gel is 0.006 or less;
   the thermoplastic resin composition has a haze of 10 % or less as measured using a 3 mm thick injection specimen according to ASTM D1003; and
   the thermoplastic resin composition has an Izod impact strength of 10 kgf-cm/cm or more as measured at room temperature using a 1/4" thick specimen:

[Equation 1]

$$180 \leq 2*r2 \leq 300,$$

wherein, in Equation 1, r2 is a thickness (nm) from a center of the graft copolymer to the core.

**2.** A thermoplastic resin composition, comprising:

an alkyl acrylate-aromatic vinyl compound-vinyl cyanide compound graft copolymer (A) comprising a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and
a non-graft copolymer (B) comprising an alkyl (meth)acrylate, an aromatic vinyl compound, and a vinyl cyanide compound,
wherein the graft copolymer (A) satisfies both Equations 1 and 2 below:

[Equation 1]

$$180 \leq 2*r2 \leq 300$$

[Equation 2]

$$25 \leq r2-r1 \leq 45,$$

wherein, in Equations 1 and 2, r1 is a thickness (nm) from a center of the graft copolymer to the seed, and r2 is a thickness (nm) from a center of the graft copolymer to the core.

**3.** The thermoplastic resin composition according to claim 1 or 2, wherein, in the graft copolymer (A), a refractive index difference between the rubber core and the shell is 0.093 or less.

**4.** The thermoplastic resin composition according to claim 1 or 2, wherein a refractive index difference between the polymer seed of the graft copolymer (A) and the non-graft copolymer (B) is 0.015 or less.

**5.** The thermoplastic resin composition according to claim 1 or 2, wherein, based on 100 % by weight in total of the graft copolymer (A), the graft copolymer (A) comprises 5 to 35 % by weight of the polymer seed, 25 to 55 % by weight of the rubber core, and 25 to 55 % by weight of the graft shell.

**6.** The thermoplastic resin composition according to claim 1 or 2, wherein the non-graft copolymer (B) comprises 55 to 85 % by weight of an alkyl (meth)acrylate, 10 to 35 % by weight of an aromatic vinyl compound, and 1 to 20 % by weight of a vinyl cyanide compound.

**7.** The thermoplastic resin composition according to claim 1 or 2, wherein the thermoplastic resin composition comprises 10 to 90 % by weight of the graft copolymer (A) and 10 to 90 % by weight of the non-graft copolymer (B).

**8.** The thermoplastic resin composition according to claim 1 or 2, wherein the thermoplastic resin composition comprises an alkyl acrylate-aromatic vinyl compound-vinyl cyanide compound graft copolymer (C) containing a rubber core having an average particle diameter of 50 to 150 nm.

**9.** The thermoplastic resin composition according to claim 2, wherein, when acetone is added to the thermoplastic resin composition and stirring and centrifugation are performed so that the thermoplastic resin composition is separated into a sol and a gel, a refractive index difference between the sol and the gel is 0.006 or less.

**10.** The thermoplastic resin composition according to claim 2, wherein the thermoplastic resin composition has a haze

of 10 % or less as measured using a 3 mm thick injection specimen according to ASTM D1003.

**11.** The thermoplastic resin composition according to claim 1 or 2, wherein the thermoplastic resin composition has a gloss of 122 or more as measured at 45° using a 3 mm thick injection specimen according to ASTM D2457.

**12.** The thermoplastic resin composition according to claim 1, wherein the thermoplastic resin composition has an Izod impact strength of 10 kgf·cm/cm or more as measured at room temperature using a 1/4" thick specimen according to ASTM D256.

**13.** A method of preparing a thermoplastic resin composition, comprising kneading and extruding, at 180 to 300 °C and 80 to 400 rpm, an alkyl acrylate-aromatic vinyl compound-vinyl cyanide compound graft copolymer (A) comprising a seed obtained by polymerizing 45 to 72 % by weight of an alkyl acrylate and 28 to 55 % by weight of an aromatic vinyl compound, a rubber core formed to surround the seed and obtained by polymerizing 78 to 91 % by weight of an alkyl acrylate and 9 to 22 % by weight of an aromatic vinyl compound, and a graft shell formed to surround the rubber core and obtained by polymerizing 65 to 82 % by weight of an aromatic vinyl compound, 12 to 30 % by weight of a vinyl cyanide compound, and 3 to 15 % by weight of an alkyl acrylate; and a non-graft copolymer (B) comprising an alkyl (meth)acrylate, an aromatic vinyl compound, and a vinyl cyanide compound,

wherein the graft copolymer (A) satisfies both Equations 1 and 2 below:

[Equation 1]

$$180 \leq 2*r2 \leq 300$$

[Equation 2]

$$25 \leq r2-r1 \leq 45,$$

wherein, in Equations 1 and 2, r1 is a thickness (nm) from a center of the graft copolymer to the seed, and r2 is a thickness (nm) from a center of the graft copolymer to the core.

**14.** The method according to claim 13, wherein, in the kneading and extruding, an alkyl acrylate-aromatic vinyl compound-vinyl cyanide compound graft copolymer (C) containing a rubber core having an average particle diameter of 50 to 150 nm is comprised.

**15.** A molded article, comprising the thermoplastic resin composition according to any one of claims 1 to 12.

**INTERNATIONAL SEARCH REPORT**

International application No.
**PCT/KR2023/007433**

**A. CLASSIFICATION OF SUBJECT MATTER**

**C08L 51/06**(2006.01)i; **C08L 33/06**(2006.01)i; **C08F 285/00**(2006.01)i; **C08F 265/06**(2006.01)i; **C08F 220/18**(2006.01)i; **C08F 220/44**(2006.01)i; **C08F 212/08**(2006.01)i

According to International Patent Classification (IPC) or to both national classification and IPC

**B. FIELDS SEARCHED**

Minimum documentation searched (classification system followed by classification symbols)

C08L 51/06(2006.01); C08F 12/04(2006.01); C08F 2/22(2006.01); C08F 2/24(2006.01); C08F 20/10(2006.01); C08F 265/04(2006.01); C08F 279/04(2006.01); C08L 13/00(2006.01); C08L 25/12(2006.01); C08L 29/06(2006.01); C08L 51/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그라프트 공중합체(graft copolymer), 알킬 아크릴레이트(alkyl acrylate), 고무 코어(rubber core), 쉘(shell), 열가소성 수지(thermoplastic resin)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2022-0020200 A (LG CHEM, LTD.) 18 February 2022 (2022-02-18)<br>See claims 1-12; and paragraphs [0038]-[0350]. | 1,3-8,11-12<br>2,9-10,13-14 |
| Y | KR 10-1333578 B1 (CHEIL INDUSTRIES INC.) 27 November 2013 (2013-11-27)<br>See paragraphs [0010]-[0042]. | 2,9-10,13-14 |
| A | US 3944631 A (YU, A. J. et al.) 16 March 1976 (1976-03-16)<br>See entire document. | 1-14 |
| A | KR 10-2015-0142493 A (LG CHEM, LTD.) 22 December 2015 (2015-12-22)<br>See entire document. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 September 2023** | **01 September 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/007433**

| C. DOCUMENTS CONSIDERED TO BE RELEVANT | | |
|---|---|---|
| Category* | Citation of document, with indication, where appropriate, of the relevant passages | Relevant to claim No. |
| A | CN 105164166 B (JOINT-STOCK COMPANY OF BEN LING GROUPS) 22 December 2017 (2017-12-22)<br>See entire document. | 1-14 |

Form PCT/ISA/210 (second sheet) (July 2022)

**INTERNATIONAL SEARCH REPORT**

International application No.
**PCT/KR2023/007433**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **15**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2023/007433**

| Patent document cited in search report | Publication date (day/month/year) | Patent family member(s) | Publication date (day/month/year) |
|---|---|---|---|
| KR 10-2022-0020200 A | 18 February 2022 | None | |
| KR 10-1333578 B1 | 27 November 2013 | KR 10-2012-0076031 A | 09 July 2012 |
| US 3944631 A | 16 March 1976 | JP 5739253 B2 | 20 August 1982 |
| KR 10-2015-0142493 A | 22 December 2015 | KR 10-1692106 B1 | 02 January 2017 |
| CN 105164166 B | 22 December 2017 | CN 105164166 A | 16 December 2015 |
| | | EP 2986650 A1 | 24 February 2016 |
| | | EP 2986650 B1 | 08 August 2018 |
| | | ES 2685809 T3 | 11 October 2018 |
| | | KR 10-2015-0144795 A | 28 December 2015 |
| | | KR 10-2179358 B1 | 18 November 2020 |
| | | US 2016-0075813 A1 | 17 March 2016 |
| | | US 9624333 B2 | 18 April 2017 |
| | | WO 2014-170406 A1 | 23 October 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220072522